# FASCICULE DE BREVET EUROPEEN

(11) **EP 3 446 390 B1**
(45) Date de publication et mention de la délivrance du brevet: **25.10.2023**
(21) Numéro de dépôt: 17721794.0
(22) Date de dépôt: 19.04.2017
(51) Int. Cl.: H02H 3/20, H02H 7/18, H02H 11/00

(54) **PROTECTION DE L'ALIMENTATION ELECTRIQUE D'UN VEHICULE**
SCHUTZ ZUR STROMVERSORGUNG EINES FAHRZEUGS
PROTECTION FOR THE ELECTRICAL POWER SUPPLY OF A VEHICLE

(30) Priorité: 22.04.2016 FR 1653594
(43) Date de publication de la demande: 27.02.2019
(73) Titulaire: Renault s.a.s, 92100 Boulogne Billancourt (FR)
(72) Inventeur: SAINT-LEGER, Gérard, 78000 Versailles (FR); RIVET, Sophie, 78280 Guyancourt (FR)
(74) Mandataire: Renault Group
(86) Numéro de dépôt international: PCT/FR2017/050925
(87) Numéro de publication internationale: WO 2017/182753

(56) Documents cités:
- US-A- 5 781 390
- US-A1- 2007 064 362

## Description

L'invention concerne le domaine de la protection de l'alimentation électrique d'un véhicule. L'invention porte plus particulièrement sur un dispositif de protection de l'alimentation électrique d'un véhicule. Elle porte aussi sur un véhicule automobile intégrant un tel dispositif de protection de son alimentation électrique.

Dans plusieurs situations, il est nécessaire de connecter une source extérieure de puissance sur un véhicule automobile, notamment :
- Lorsque la batterie du réseau de bord (12 volts) du véhicule automobile est déchargée, auquel cas un chargeur peut être connecté à la batterie déchargée afin de la recharger ;
- Lorsque le véhicule ne démarre plus parce que sa batterie est déchargée, l'alimentation électrique dudit véhicule peut être reliée à un véhicule de dépannage ou d'un système type booster, par exemple par la connexion de câbles de démarrage sur sa batterie.

Dans ces situations, des erreurs peuvent être commises, susceptibles d'endommager le circuit électrique du véhicule automobile. A titre d'exemples, les erreurs suivantes surviennent :
- une inversion de polarité, qui consiste à inverser la connexion sur les bornes de la batterie d'un véhicule des bornes positive et négative de la source extérieure de puissance ;
- une surtension, qui consiste à connecter une source de puissance extérieure délivrant une tension trop élevée par rapport à celle de la batterie du véhicule (par exemple si l'on branche une batterie de camion ou un chargeur de camion dont la tension nominale est de 24 volts à la tension nominale du réseau de bord 12 volts).

Dans ces situations de connexion anormale, il y a des risques d'endommager gravement un ou plusieurs systèmes électriques d'un ou des deux véhicules interconnectés.

Afin d'éviter ces risques, certains véhicules de l'état de la technique intègrent des dispositifs de protection faisant appel à des systèmes électroniques complexes, tel que des microcontrôleurs couplés à des logiciels de contrôle, ce qui en fait des systèmes de protection coûteux. De plus l'utilisation d'un système électronique complexe s'avère en pratique insuffisamment fiable.

Le document US5781390 divulgue un circuit de protection contre la surtension et l'inversion de polarité pour une batterie d'alimentation électrique, comportant un élément de protection contre l'inversion de polarité couplé à un élément de protection contre la surtension, dans lequel la sortie de l'élément de protection contre la surtension est protégée en cas d'inversion de polarité et en cas de surtension batterie.

Le document US2007064362 divulgue un circuit de protection contre l'inversion de polarité et la surtension, comportant deux transistors disposés tête-bêche entre l'entrée et la sortie de l'élément à protéger, et un circuit de contrôle déconnectant l'un ou l'autre des transistors en cas de surtension ou d'inversion de polarité.

Ainsi, un objet général de la présente invention est de proposer une solution de protection de l'alimentation électrique d'un véhicule permettant de surmonter les inconvénients de l'état de la technique.

Plus précisément, l'objet de l'invention est de surmonter les problèmes qui peuvent survenir lorsqu'une source de puissance extérieure inappropriée est connectée aux bornes d'un véhicule, particulièrement lors d'une inversion de polarité et/ou lors d'une surtension appliquée au véhicule.

A cet effet, l'invention repose sur un dispositif de protection du réseau électrique d'un véhicule selon la revendication 1.

Le dispositif de protection selon un mode de réalisation de l'invention, est composé d'un circuit électronique formé:
- d'une première branche reliant la première borne d'entrée à la première borne de sortie et comportant le premier interrupteur,
- d'une deuxième branche reliant la seconde borne d'entrée à la seconde borne de sortie,
- d'une première branche intermédiaire reliant la première branche à la deuxième branche et comportant le premier dipôle non-linéaire polarisé, notamment une diode, le deuxième dipôle non-linéaire polarisé, notamment une diode Zener, ainsi que le second élément de contrôle d'interrupteur, notamment un solénoïde de commande de relais,
- d'une deuxième branche intermédiaire qui s'étend d'une connexion électrique se trouvant entre le premier dipôle non-linéaire polarisé et le deuxième dipôle non-linéaire polarisé à la deuxième branche et qui comprend le premier élément de contrôle d'interrupteur, notamment un solénoïde de commande de relais, et le second interrupteur.

Le premier interrupteur selon un mode de réalisation de l'invention, est ouvert en position de repos lorsque le dispositif de protection n'est pas connecté en amont, par sa première borne d'entrée et sa seconde borne d'entrée, à une source de tension, et fermé lorsque le dispositif de protection est connecté en amont à une source de tension positive et de tension inférieure ou égale à un seuil, qui permet au premier élément de contrôle d'interrupteur d'être soumis à une tension électrique qui actionne le premier interrupteur en fermeture.

Le second interrupteur selon un mode de réalisation de l'invention, est fermé en position de repos lorsque le dispositif de protection n'est pas connecté en amont, par sa première borne d'entrée et sa seconde borne d'entrée, à une source de tension, et ouvert lorsque le dispositif de protection est connecté en amont à une source de tension positive et de tension supérieure à un seuil, qui permet au second élément de contrôle d'interrupteur d'être soumis à une tension électrique qui actionne le second interrupteur en ouverture.

Le premier dipôle non-linéaire polarisé selon un mode de réalisation de l'invention, est agencé sur une première branche intermédiaire en parallèle par rapport à la première borne d'entrée et la deuxième borne d'entrée et est disposé dans une orientation apte à laisser passer le courant si la différence de potentiel entre la première borne d'entrée et la deuxième borne d'entrée est positive, c'est-à-dire en mode de fonctionnement normal, et est apte à ne pas laisser passer le courant en cas d'inversion de polarité entre la première borne d'entrée et la deuxième borne d'entrée, c'est-à-dire en mode de fonctionnement anormal.

Le second dipôle non-linéaire polarisé, notamment une diode Zener, selon un mode de réalisation de l'invention, est agencé sur une première branche intermédiaire en parallèle par rapport à la première borne d'entrée et la deuxième borne d'entrée et disposé dans une orientation apte à bloquer le courant si la différence de potentiel entre la première borne d'entrée et la deuxième borne d'entrée ne dépasse pas une tension de seuil, c'est-à-dire en mode de fonctionnement normal, et est apte à laisser passer le courant lorsque la différence de potentiel entre la première borne d'entrée et la deuxième borne d'entrée dépasse la tension de seuil.

La première borne d'entrée selon un mode de réalisation de l'invention, est adaptée pour une liaison à une source de tension externe au véhicule, notamment le potentiel positif d'une source extérieure de puissance, notamment un chargeur et/ou une batterie de véhicule de dépannage et/ou un alternateur de véhicule de dépannage, et la seconde borne d'entrée peut être adaptée pour une liaison à une source de tension externe au véhicule, notamment le potentiel négatif de la source extérieure de puissance et/ou la première borne de sortie peut être adaptée pour une liaison à un réseau électrique interne à un véhicule, notamment au potentiel positif de la batterie du véhicule et/ou le réseau de bord du véhicule et/ou l'alternateur du véhicule, et la seconde borne de sortie peut être adaptée pour une liaison à un réseau électrique interne au véhicule, notamment une liaison au potentiel négatif de la batterie du véhicule.

L'invention porte aussi sur un véhicule automobile, caractérisé en ce qu'il comprend au moins un composant électrique, notamment une batterie et/ou un réseau de bord et/ou un alternateur, connecté en aval d'un dispositif de protection tel que décrit précédemment.

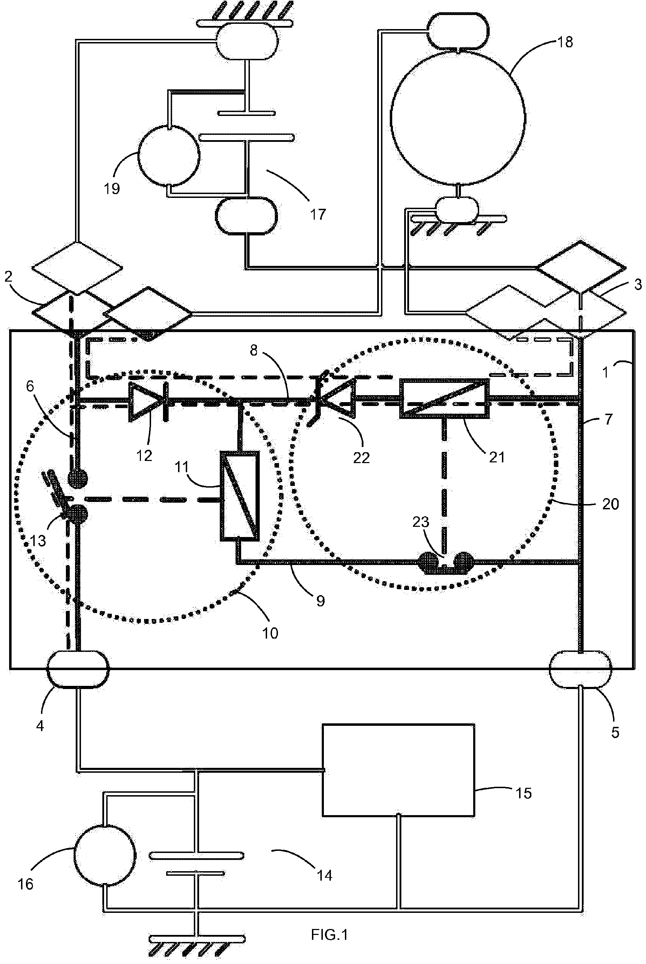

Ces objets, caractéristiques et avantages de la présente invention seront exposés en détail dans la description suivante d'un mode d'exécution particulier fait à titre non-limitatif en relation avec l'unique figure jointe qui illustre schématiquement un dispositif de protection d'un véhicule selon un mode de réalisation de l'invention.

Le dispositif de protection 1 de l'alimentation électrique d'un véhicule comprend deux parties, un dispositif de détection d'inversion de polarité 10 et un dispositif de détection de surtension 20. Ces deux dispositifs sont logés dans un boîtier comprenant quatre bornes extérieures. Dans ce mode de réalisation, le dispositif de protection 1 est installé sur le couvercle de la boite abritant la batterie du véhicule. Il se présente ainsi physiquement sous la forme d'un dispositif apte à une connexion entre une source de puissance extérieure, en amont, et tout ou partie du réseau électrique du véhicule automobile, en aval, particulièrement les sources de tension internes au véhicule, pour former une barrière de protection entre la source de puissance extérieure et le véhicule, notamment pour parer les connexions inappropriées du fait des erreurs mentionnées précédemment. L'invention porte aussi sur un véhicule automobile en tant que tel, intégrant un dispositif de protection 1, connecté en amont de tout ou partie de ses composants électriques à protéger.

Le dispositif de protection 1 de l'alimentation électrique d'un véhicule est muni de quatre bornes permettant d'être avantageusement connecté en amont et en aval. Selon le mode de réalisation, tout ou partie du réseau électrique du véhicule est connecté en aval au dispositif de protection 1, par l'intermédiaire de la première borne de sortie 4 et de la seconde borne de sortie 5. Ces bornes de sortie 4, 5 permettent d'effectuer la connexion aux bornes correspondantes (pôle positif sur pôle positif et pôle négatif sur pôle négatif) de la batterie 14 et/ou du réseau de bord 15 et/ou de l'alternateur 16 du véhicule.

D'autre part, tout ou partie du réseau électrique du véhicule est susceptible d'être connecté à une source de puissance extérieure, par l'intermédiaire du dispositif de protection 1 de l'alimentation d'un véhicule, par l'intermédiaire de sa première borne d'entrée 2 et de sa seconde borne d'entrée 3. Dans ce mode de réalisation la première borne d'entrée 2 ainsi que la seconde borne d'entrée 3 sont des plots de connexion agencés de façon à permettre la connexion des deux pôles de la source extérieure de puissance au dispositif de protection, ceci à l'aide de pinces de chargeur de batteries ou de câbles de dépannage. Le dispositif de protection 1 est ainsi susceptible d'une connexion en amont par exemple à la batterie 17 d'un véhicule de dépannage et/ou sur l'alternateur 19 d'un véhicule de dépannage et/ou sur un chargeur 18 de batterie.

Le circuit électronique du dispositif de détection d'inversion de polarité 10 est composé d'un premier dipôle non-linéaire polarisé 12, d'un premier élément de contrôle d'interrupteur 11 et d'un premier interrupteur 13 commandé par le premier élément de contrôle d'interrupteur 11. Selon ce mode de réalisation le premier dipôle non-linéaire 12 est une diode et le premier élément de contrôle d'interrupteur 11 est un solénoïde de commande de relais.

Le circuit électronique du dispositif de détection de surtension 20 est composé d'un second dipôle non-linéaire polarisé 22, d'un second élément de contrôle d'interrupteur 21 et d'un second interrupteur 23 commandé par le second élément de contrôle d'interrupteur 21. Selon ce mode de réalisation le second dipôle non-linéaire 22 est une diode Zener et le second élément de contrôle d'interrupteur 21 est un solénoïde de commande de relais.

Selon le mode de réalisation, le circuit électronique du dispositif de protection 1 de l'alimentation électrique d'un véhicule est formé des quatre branches présentées ci-après:
- une première branche 6 reliant la première borne d'entrée 2 à la première borne de sortie 4 comprend le premier interrupteur 13 ;
- une deuxième branche 7 relie la seconde borne d'entrée 3 à la seconde borne de sortie 5 ;
- une première branche intermédiaire 8 reliant la première branche 6 à la deuxième branche 7 comprend le premier dipôle non-linéaire polarisé 12, le second dipôle non-linéaire polarisé 22 et le second élément de contrôle d'interrupteur 21 ;
- une deuxième branche intermédiaire 9 comprend le premier élément de contrôle d'interrupteur 11 et le second interrupteur 23, et s'étend d'une connexion électrique se trouvant entre le premier dipôle non-linéaire polarisé 12 et le second dipôle non-linéaire polarisé 22 à la deuxième branche 7.

Le fonctionnement du dispositif de protection 1 va maintenant être expliqué.

En mode de fonctionnement normal, c'est-à-dire lorsque la polarité n'est pas inversée et lorsque la tension entre la première borne d'entrée 2 et la seconde borne d'entrée 3 prend une valeur inférieure ou égale à un seuil prédéfini, par exemple de 16 volts, voire 14 volts, voire 12.5 volts, un courant électrique traverse le premier dipôle non-linéaire polarisé 12 tout en étant bloqué par le second dipôle non-linéaire polarisé 22. Le second élément de contrôle d'interrupteur 21 n'étant soumis à aucune tension électrique, il s'ensuit que le second interrupteur 23 reste en position de repos fermée. Une tension électrique peut ainsi s'établir aux bornes du premier élément de contrôle d'interrupteur 11, faisant ainsi basculer le premier interrupteur 13, d'une position de repos ouverte à une position de travail fermée. Ainsi une connexion électrique s'établit entre la première borne d'entrée 2 et la première borne de sortie 4. La tension se trouvant entre la première borne d'entrée 2 et la seconde borne d'entrée 3 est ainsi appliquée, par l'intermédiaire de la première borne de sortie 4 et la seconde borne de sortie 5, aux bornes de la batterie 14 et/ou aux bornes du réseau de bord 15 et/ou aux bornes de l'alternateur 16 du véhicule, et plus généralement à tout composant électrique du véhicule connecté en aval du dispositif de protection 1.

Deux situations de fonctionnement anormal peuvent survenir, comme explicité précédemment, une inversion de polarité et une surtension. Ces deux cas peuvent se produire indépendamment l'un de l'autre, ou simultanément.

Dans le premier cas d'une inversion de polarité, le premier dipôle non-linéaire polarisé 12 bloque le passage du courant dans la première branche intermédiaire 8. Il s'ensuit que le premier élément de contrôle d'interrupteur 11 n'est soumis à aucune tension électrique, ce qui induit que l'interrupteur 13 reste en position de repos ouverte. Ainsi, la première borne de sortie 4 n'est pas connectée à la première borne d'entrée 2 et tout composant électrique relié en aval du dispositif de protection 1 n'est pas soumis à la tension inversée reçue par le dispositif de protection 1.

Dans le second cas, lors d'une surtension qui est définie comme une valeur de la tension électrique entre la première borne d'entrée 2 et la seconde borne d'entrée 3 supérieure au seuil prédéfini, le second dipôle non-linéaire polarisé 22 laisse passer un courant électrique. En remarque, ce second dipôle 22 est choisi pour offrir ce changement de comportement au seuil de tension prédéfini. Il s'ensuit que le second élément de contrôle d'interrupteur 21 fait basculer le second interrupteur 23 d'une position de repos fermée à une position de travail ouverte. Ainsi le premier élément de contrôle d'interrupteur 11 ne peut être soumis à une quelconque tension électrique, il s'ensuit que le premier interrupteur 13 reste en position de repos ouverte, empêchant ainsi à la tension se trouvant entre la première borne d'entrée 2 et la seconde borne d'entrée 3 de s'établir entre la première borne de sortie 4 et la seconde borne de sortie 5.

La solution permet donc bien d'atteindre les objectifs recherchés, en permettant d'empêcher à un système équipé de subir une inversion de tension ou une surtension. En remarque, le dispositif de protection 1 peut être associé à tout système fonctionnant avec une batterie, autre qu'un véhicule automobile.

Le dispositif de protection 1 décrit précédemment présente l'avantage de former une solution simple, peu coûteuse et fiable, car mettant en oeuvre des éléments électroniques matériels, sans utiliser de microcontrôleur, ni de logiciel.

Un autre avantage de la présente invention est qu'elle peut être utilisée avec n'importe quelle source de puissance extérieure, et ceci sans avoir besoin d'effectuer aucune action sur la source extérieure de puissance que son branchement classique, ni de prévoir une source extérieure dotée d'une protection particulière.

Un procédé de protection du réseau électrique d'un véhicule à l'aide d'un dispositif de protection tel que décrit précédemment, non revendiqué, comprend une étape de protection contre une inversion de polarité aux deux bornes d'entrée du dispositif de protection comprenant les sous-étapes suivantes:
- lorsque la tension entre la première borne d'entrée 2 et la seconde borne d'entrée 3 est positive, un courant traverse un premier dipôle non-linéaire polarisé 12 et un premier élément de contrôle d'interrupteur 11, ce qui a pour effet d'actionner en fermeture un premier interrupteur 13 et donc de connecter électriquement la première borne d'entrée 2 à la première borne de sortie 4,
- lorsque la tension entre la première borne d'entrée 2 et la seconde borne d'entrée 3 est négative, c'est-à-dire lorsqu'il y a inversion de polarité, aucun courant ne traverse le premier dipôle non-linéaire polarisé 12 ni le premier élément de contrôle d'interrupteur 11, laissant le premier interrupteur 13 en position ouverte de repos.

Le procédé de protection comprend une étape de protection contre une surtension aux deux bornes d'entrée 2, 3 du dispositif de protection comprenant les sous-étapes suivantes:
- lorsque la valeur de la tension entre la première borne d'entrée 2 et la seconde borne d'entrée 3 se trouve sous ou égale à un seuil de tension, aucun courant ne traverse un second dipôle non-linéaire polarisé 22 ni un second élément de contrôle d'interrupteur 21, laissant un second interrupteur 23 fermé en position de repos,
- lorsque la tension entre la première borne d'entrée 2 et la seconde borne d'entrée 3 est supérieure à un seuil de tension, le second dipôle non-linéaire polarisé 22 laisse passer le courant, et le second élément de contrôle d'interrupteur 21 entraine l'ouverture du second interrupteur 23, gardant ainsi le premier interrupteur 13 ouvert.

## Revendications

1. Dispositif de protection (1) du réseau électrique d'un véhicule comprenant deux parties :
• un dispositif de détection d'inversion de polarité (10),
• un dispositif de détection de surtension (20),
et étant muni de quatre bornes :
• une première borne d'entrée (2),
• une seconde borne d'entrée (3),
• une première borne de sortie (4),
• une seconde borne de sortie (5),
**caractérisé en ce que** le dispositif de détection d'inversion de polarité (10) est doté d'un premier dipôle non-linéaire polarisé (12), soit traversé par un courant électrique lorsque la tension entre la première borne d'entrée (2) et la seconde borne d'entrée (3) est positive, soit bloquant le passage d'un tel courant lorsque la tension entre la première borne d'entrée (2) et la seconde borne d'entrée (3) est négative, de sorte à ce qu'un premier élément de contrôle d'interrupteur (11) commande un premier interrupteur (13) avec pour effet d'actionner en fermeture le premier interrupteur (13) et donc de connecter électriquement la première borne d'entrée (2) à la première borne de sortie (4), lorsque le courant traverse le premier dipôle non-linéaire polarisé (12),
et **en ce que** le dispositif de détection de surtension (20) est doté d'un second dipôle non-linéaire polarisé (22) ne laissant passer un courant électrique qu'en cas de valeur de la tension électrique entre la première borne d'entrée (2) et la seconde borne d'entrée (3) supérieure à une tension de seuil prédéfinie, de sorte à ce qu'un second élément de contrôle d'interrupteur (21) commande un second interrupteur (23) d'une position de repos fermée à une position de travail ouverte de sorte à ce que le premier élément de contrôle d'interrupteur (11) ne puisse être soumis à une quelconque tension électrique ne faisant ainsi basculer le premier interrupteur lorsque la tension entre la première borne d'entrée (2) et la seconde borne d'entrée (3) est supérieure au seuil de tension prédéfini.

2. Dispositif de protection (1) selon la revendication précédente, **caractérisé en ce qu'**il est composé d'un circuit électronique formé:
- d'une première branche (6) reliant la première borne d'entrée (2) à la première borne de sortie (4) et comportant le premier interrupteur (13),
- d'une deuxième branche (7) reliant la seconde borne d'entrée (3) à la seconde borne de sortie (5),
- d'une première branche intermédiaire (8) reliant la première branche (6) à la deuxième branche (7) et comportant le premier dipôle non-linéaire polarisé (12), notamment une diode, le deuxième dipôle non-linéaire polarisé (22), notamment une diode Zener, ainsi que le second élément de contrôle d'interrupteur (21), notamment un solénoïde de commande de relais,
- d'une deuxième branche intermédiaire (9) qui s'étend d'une connexion électrique se trouvant entre le premier dipôle non-linéaire polarisé (12) et le deuxième dipôle non-linéaire polarisé (22) à la deuxième branche (7) et qui comprend le premier élément de contrôle d'interrupteur (11), notamment un solénoïde de commande de relais, et le second interrupteur (23).

3. Dispositif de protection (1) selon la revendication 1 ou 2, **caractérisé en ce que** le premier interrupteur (13) est ouvert en position de repos lorsque le dispositif de protection (1) n'est pas connecté en amont, par sa première borne d'entrée (2) et sa seconde borne d'entrée (3), à une source de tension, et fermé lorsque le dispositif de protection (1) est connecté en amont à une source de tension, cette tension entre la première borne d'entrée (2) et la seconde borne d'entrée (3) étant positive et inférieure ou égale à la tension de seuil prédéfinie, qui permet au premier élément de contrôle d'interrupteur (11) d'être soumis à une tension électrique qui actionne le premier interrupteur (13) en fermeture.

4. Dispositif de protection selon l'une des revendications précédentes, **caractérisé en ce que** le second interrupteur (23) est fermé en position de repos lorsque le dispositif de protection (1) n'est pas connecté en amont, par sa première borne d'entrée (2) et sa seconde borne d'entrée (3), à une source de tension, et ouvert lorsque le dispositif de protection (1) est connecté en amont à une source de tension, cette tension entre la première borne d'entrée (2) et la seconde borne d'entrée (3) étant positive et supérieure à la tension de seuil prédéfinie, qui permet au second élément de contrôle d'interrupteur (21) d'être soumis à une tension électrique qui actionne le second interrupteur (23) en ouverture.

5. Dispositif de protection (1) selon l'une des revendications précédentes, **caractérisé en ce que** le premier dipôle non-linéaire polarisé (12) est agencé sur une première branche intermédiaire (8) en parallèle par rapport à la première borne d'entrée (2) et la deuxième borne d'entrée (3) et est disposé dans une orientation apte à laisser passer le courant si la différence de potentiel entre la première borne d'entrée (2) et la deuxième borne d'entrée (3) est positive, c'est-à-dire en mode de fonctionnement normal, et est apte à ne pas laisser passer le courant en cas d'inversion de polarité entre la première borne d'entrée (2) et la deuxième borne d'entrée (3), c'est-à-dire en mode de fonctionnement anormal.

6. Dispositif de protection (1) selon l'une des revendications précédentes, **caractérisé en ce que** le second dipôle non-linéaire polarisé (22), notamment une diode Zener, est agencé sur une première branche intermédiaire (8) en parallèle par rapport à la première borne d'entrée (2) et la deuxième borne d'entrée (3) et est disposé dans une orientation apte à bloquer le courant si la différence de potentiel entre la première borne d'entrée (2) et la deuxième borne d'entrée (3) ne dépasse pas la tension de seuil prédéfinie, c'est-à-dire en mode de fonctionnement normal, et est apte à laisser passer le courant lorsque la différence de potentiel entre la première borne d'entrée (2) et la deuxième borne d'entrée (3) dépasse la tension de seuil prédéfinie.

7. Dispositif de protection (1) selon l'une des revendications précédentes, **caractérisé en ce que** la première borne d'entrée (2) est adaptée pour une liaison à une source de tension externe au véhicule, notamment le potentiel positif d'une source extérieure de puissance, notamment un chargeur (18) et/ou une batterie (17) de véhicule de dépannage et/ou un alternateur (19) de véhicule de dépannage, et **caractérisé en ce que** la seconde borne d'entrée (3) est adaptée pour une liaison à une source de tension externe au véhicule, notamment le potentiel négatif de la source extérieure de puissance et/ou **caractérisé en ce que** la première borne de sortie (4) est adaptée pour une liaison à un réseau électrique interne à un véhicule, notamment au potentiel positif de la batterie du véhicule (14) et/ou le réseau de bord du véhicule (15) et/ou l'alternateur (16) du véhicule, et **caractérisé en ce que** la seconde borne de sortie (5) est adaptée pour une liaison à un réseau électrique interne au véhicule, notamment une liaison au potentiel négatif de la batterie du véhicule.

8. Véhicule automobile, **caractérisé en ce qu'**il comprend au moins un composant électrique, notamment une batterie (14) et/ou un réseau de bord (15) et/ou un alternateur (16), connecté en aval d'un dispositif de protection (1) selon l'une des revendications 1 à 7.

## Patentansprüche

1. Schutzvorrichtung (1) des Stromnetzes eines Fahrzeugs, die zwei Teile enthält:
• eine Vorrichtung zur Erkennung einer Verpolung (10),
• eine Vorrichtung zur Erkennung einer Überspannung (20),
und mit vier Anschlüssen versehen ist:
• einem ersten Eingangsanschluss (2),
• einem zweiten Eingangsanschluss (3),
• einem ersten Ausgangsanschluss (4),
• einem zweiten Ausgangsanschluss (5),
**dadurch gekennzeichnet, dass** die Vorrichtung zur Erkennung einer Verpolung (10) mit einem ersten polarisierten nichtlinearen Dipol (12) ausgestattet ist, der entweder von einem elektrischen Strom durchquert wird, wenn die Spannung zwischen dem ersten Eingangsanschluss (2) und dem zweiten Eingangsanschluss (3) positiv ist, oder den Durchgang eines solchen Stroms blockiert, wenn die Spannung zwischen dem ersten Eingangsanschluss (2) und dem zweiten Eingangsanschluss (3) negativ ist, so dass ein erstes Schaltersteuerelement (11) einen ersten Schalter (13) mit der Wirkung steuert, das Schließen des ersten Schalters (13) in Gang zu setzen und somit den ersten Eingangsanschluss (2) mit dem ersten Ausgangsanschluss (4) elektrisch zu verbinden, wenn der Strom den ersten polarisierten nichtlinearen Dipol (12) durchquert,
und dass die Vorrichtung zur Erkennung einer Überspannung (20) mit einem zweiten polarisierten nichtlinearen Dipol (22) ausgestattet ist, der einen elektrischen Strom nur im Fall eines Werts der elektrischen Spannung zwischen dem ersten Eingangsanschluss (2) und dem zweiten Eingangsanschluss (3) höher als eine vordefinierte Schwellenspannung durchlässt, damit ein zweites Schaltersteuerelement (21) einen zweiten Schalter (23) von einer geschlossenen Ruhestellung in eine offene Arbeitsstellung steuert, damit das erste Schaltersteuerelement (11) nicht unter irgendeine elektrische Spannung gesetzt werden kann, wodurch so der erste Schalter nicht umgelegt wird, wenn die Spannung zwischen dem ersten Eingangsanschluss (2) und dem zweiten Eingangsanschluss (3) höher ist als die vordefinierte Spannungsschwelle.

2. Schutzvorrichtung (1) nach dem vorhergehenden Anspruch, **dadurch gekennzeichnet, dass** sie aus einer Elektronikschaltung besteht, die geformt wird:
- von einem ersten Zweig (6), der den ersten Eingangsanschluss (2) mit dem ersten Ausgangsanschluss (4) verbindet und den ersten Schalter (13) aufweist,
- von einem zweiten Zweig (7), der den zweiten Eingangsanschluss (3) mit dem zweiten Ausgangsanschluss (5) verbindet,
- von einem ersten Zwischenzweig (8), der den ersten Zweig (6) mit dem zweiten Zweig (7) verbindet und den ersten polarisierten nichtlinearen Dipol (12), insbesondere eine Diode, den zweiten polarisierten nichtlinearen Dipol (22), insbesondere eine Zener-Diode, sowie das zweite Schaltersteuerelement (21) aufweist, insbesondere ein Solenoid zur Relaissteuerung,
- von einem zweiten Zwischenzweig (9), der sich von einer elektrischen Verbindung, die sich zwischen dem ersten polarisierten nichtlinearen Dipol (12) und dem zweiten polarisierten nichtlinearen Dipol (22) befindet, zum zweiten Zweig (7) erstreckt und der das erste Schaltersteuerelement (11), insbesondere ein Solenoid zur Relaissteuerung, und den zweiten Schalter (23) enthält.

3. Schutzvorrichtung (1) nach Anspruch 1 oder 2, **dadurch gekennzeichnet, dass** der erste Schalter (13) in der Ruhestellung offen ist, wenn die Schutzvorrichtung (1) nicht stromaufwärts durch ihren ersten Eingangsanschluss (2) und ihren zweiten Eingangsanschluss (3) mit einer Spannungsquelle verbunden ist, und geschlossen ist, wenn die Schutzvorrichtung (1) stromaufwärts mit einer Spannungsquelle verbunden ist, wobei diese Spannung zwischen dem ersten Eingangsanschluss (2) und dem zweiten Eingangsanschluss (3) positiv und niedriger als die oder gleich der vordefinierten Schwellenspannung ist, die es dem ersten Schaltersteuerelement (11) ermöglicht, unter eine elektrische Spannung gesetzt zu werden, die das Schließen des ersten Schalters (13) in Gang setzt.

4. Schutzvorrichtung nach einem der vorhergehenden Ansprüche, **dadurch gekennzeichnet, dass** der zweite Schalter (23) in der Ruhestellung geschlossen ist, wenn die Schutzvorrichtung (1) nicht stromaufwärts durch ihren ersten Eingangsanschluss (2) und ihren zweiten Eingangsanschluss (3) mit einer Spannungsquelle verbunden ist, und offen ist, wenn die Schutzvorrichtung (1) stromaufwärts mit einer Spannungsquelle verbunden ist, wobei diese Spannung zwischen dem ersten Eingangsanschluss (2) und dem zweiten Eingangsanschluss (3) positiv und höher als die vordefinierte Schwellenspannung ist, die es dem zweiten Schaltersteuerelement (21) ermöglicht, unter eine elektrische Spannung gesetzt zu werden, die das Öffnen des zweiten Schalters (23) in Gang setzt.

5. Schutzvorrichtung (1) nach einem der vorhergehenden Ansprüche, **dadurch gekennzeichnet, dass** der erste polarisierte nichtlineare Dipol (12) auf einem ersten Zwischenzweig (8) parallel bezüglich des ersten Eingangsanschlusses (2) und des zweiten Eingangsanschlusses (3) eingerichtet und in einer Ausrichtung angeordnet ist, die geeignet ist, den Strom durchzulassen, wenn die Potentialdifferenz zwischen dem ersten Eingangsanschluss (2) und dem zweiten Eingangsanschluss (3) positiv ist, d.h. im normalen Betriebsmodus, und geeignet ist, den Strom im Fall einer Verpolung zwischen dem ersten Eingangsanschluss (2) und dem zweiten Eingangsanschluss (3), d.h. im anormalen Betriebsmodus, nicht durchzulassen.

6. Schutzvorrichtung (1) nach einem der vorhergehenden Ansprüche, **dadurch gekennzeichnet, dass** der zweite polarisierte nichtlineare Dipol (22), insbesondere eine Zener-Diode, auf einem ersten Zwischenzweig (8) parallel bezüglich des ersten Eingangsanschlusses (2) und des zweiten Eingangsanschlusses (3) eingerichtet und in einer Ausrichtung angeordnet ist, die geeignet ist, den Strom zu blockieren, wenn die Potentialdifferenz zwischen dem ersten Eingangsanschluss (2) und dem zweiten Eingangsanschluss (3) die vordefinierte Schwellenspannung nicht überschreitet, d.h., im normalen Betriebsmodus, und geeignet ist, den Strom durchzulassen, wenn die Potentialdifferenz zwischen dem ersten Eingangsanschluss (2) und dem zweiten Eingangsanschluss (3) die vordefinierte Schwellenspannung überschreitet.

7. Schutzvorrichtung (1) nach einem der vorhergehenden Ansprüche, **dadurch gekennzeichnet, dass** der erste Eingangsanschluss (2) für eine Verbindung mit einer Spannungsquelle außerhalb des Fahrzeugs angepasst ist, insbesondere das positive Potential einer externen Leistungsquelle, insbesondere ein Ladegerät (18) und/oder eine Batterie (17) eines Abschleppfahrzeugs und/oder ein Generator (19) eines Abschleppfahrzeugs, und **dadurch gekennzeichnet, dass** der zweite Eingangsanschluss (3) für eine Verbindung mit einer Spannungsquelle außerhalb des Fahrzeugs angepasst ist, insbesondere das negative Potential der externen Leistungsquelle, und/oder **dadurch gekennzeichnet, dass** der erste Ausgangsanschluss (4) für eine Verbindung mit einem Stromnetz innerhalb eines Fahrzeugs angepasst ist, insbesondere mit dem positiven Potential der Batterie des Fahrzeugs (14) und/oder dem Bordnetz des Fahrzeugs (15) und/oder dem Generator (16) des Fahrzeugs, und **dadurch gekennzeichnet, dass** der zweite Ausgangsanschluss (5) für eine Verbindung mit einem Stromnetz innerhalb des Fahrzeugs angepasst ist, insbesondere eine Verbindung mit dem negativen Potential der Batterie des Fahrzeugs.

8. Kraftfahrzeug, **dadurch gekennzeichnet, dass** es mindestens ein elektrisches Bauteil, insbesondere eine Batterie (14) und/oder ein Bordnetz (15) und/oder einen Generator (16), enthält, das stromabwärts hinter einer Schutzvorrichtung (1) nach einem der Ansprüche 1 bis 7 verbunden ist.

## Claims

1. Device (1) for protecting the electrical network of a vehicle, comprising two parts:
• a device (10) for detecting polarity inversion;
• an overvoltage detection device (20);
and being provided with four terminals:
• a first input terminal (2);
• a second input terminal (3);
• a first output terminal (4);
• a second output terminal (5),
**characterized in that** the device (10) for detecting polarity inversion is provided with a first polarized nonlinear dipole (12), either allowing an electric current to flow therethrough when the voltage between the first input terminal (2) and the second input terminal (3) is positive, or blocking the flow of such a current when the voltage between the first input terminal (2) and the second input terminal (3) is negative, such that a first switch control element (11) controls a first switch (13) with as effect actuation of closure of the first switch (13) and hence electrical connection of the first input terminal (2) to the first output terminal (4), when the current flows through the first polarized nonlinear dipole (12),
and **in that** the overvoltage detection device (20) is provided with a second polarized nonlinear dipole (22) allowing an electric current to flow only in the case that the value of the voltage between the first input terminal (2) and the second input terminal (3) is higher than a predefined threshold voltage, such that a second switch control element (21) controls a second switch (23) so that it switches from a closed rest position to an open working position such that the first switch control element (11) cannot be subjected to any voltage, thus preventing the first switch from switching when the voltage between the first input terminal (2) and the second input terminal (3) is higher than the predefined voltage threshold.

2. Protection device (1) according to the preceding claim, **characterized in that** it is composed of an electronic circuit formed:
- of a first branch (6) connecting the first input terminal (2) to the first output terminal (4) and including the first switch (13);
- of a second branch (7) connecting the second input terminal (3) to the second output terminal (5);
- of a first intermediate branch (8) connecting the first branch (6) to the second branch (7) and including the first polarized nonlinear dipole (12), in particular a diode, the second polarized nonlinear dipole (22), in particular a Zener diode, and the second switch control element (21), in particular a relay control solenoid;
- of a second intermediate branch (9) that extends from an electrical connection located between the first polarized nonlinear dipole (12) and the second polarized nonlinear dipole (22) to the second branch (7) and that comprises the first switch control element (11), in particular a relay control solenoid, and the second switch (23).

3. Protection device (1) according to Claim 1 or 2, **characterized in that** the first switch (13) is open in the rest position when the protection device (1) is not connected upstream, by its first input terminal (2) and its second input terminal (3), to a voltage source, and closed when the protection device (1) is connected upstream to a voltage source, this voltage between the first input terminal (2) and the second input terminal (3) being positive and lower than or equal to the predefined threshold voltage, which allows the first switch control element (11) to be subjected to a voltage which actuates the closure of the first switch (13).

4. Protection device according to one of the preceding claims, **characterized in that** the second switch (23) is closed in the rest position when the protection device (1) is not connected upstream, by its first input terminal (2) and its second input terminal (3), to a voltage source, and open when the protection device (1) is connected upstream to a voltage source, this voltage between the first input terminal (2) and the second input terminal (3) being positive and higher than the predefined threshold voltage, which allows the second switch control element (21) to be subjected to a voltage which actuates the opening of the second switch (23).

5. Protection device (1) according to one of the preceding claims, **characterized in that** the first polarized nonlinear dipole (12) is arranged on a first intermediate branch (8) in parallel with respect to the first input terminal (2) and the second input terminal (3) and is positioned in an orientation that is suitable for allowing the current to flow if the difference in potential between the first input terminal (2) and the second input terminal (3) is positive, i.e. in the normal operating mode, and is suitable for not allowing the current to flow in the case of a polarity inversion between the first input terminal (2) and the second input terminal (3), i.e. in an abnormal operating mode.

6. Protection device (1) according to one of the preceding claims, **characterized in that** the second polarized nonlinear dipole (22), in particular a Zener diode, is arranged on a first intermediate branch (8) in parallel with respect to the first input terminal (2) and the second input terminal (3) and is positioned in an orientation that is suitable for blocking the current if the difference in potential between the first input terminal (2) and the second input terminal (3) does not exceed the predefined threshold voltage, i.e. in the normal operating mode, and is suitable for allowing the current to flow when the difference in potential between the first input terminal (2) and the second input terminal (3) exceeds the predefined threshold voltage.

7. Protection device (1) according to one of the preceding claims, **characterized in that** the first input terminal (2) is suitable for connecting to a voltage source external to the vehicle, in particular the positive potential of an external power source, in particular a charger (18) and/or a battery (17) of a recovery vehicle and/or an alternator (19) of a recovery vehicle, and **characterized in that** the second input terminal (3) is suitable for connecting to a voltage source external to the vehicle, in particular the negative potential of the external power source and/or **characterized in that** the first output terminal (4) is suitable for connecting to an electrical network inside a vehicle, in particular to the positive potential of the battery of the vehicle (14) and/or the onboard network of the vehicle (15) and/or the alternator (16) of the vehicle, and **characterized in that** the second output terminal (5) is suitable for connecting to an electrical network inside the vehicle, in particular connecting to the negative potential of the battery of the vehicle.

8. Motor vehicle, **characterized in that** it comprises at least one electrical component, in particular a battery (14) and/or an onboard network (15) and/or an alternator (16), connected downstream of a protection device (1) according to one of Claims 1 to 7.
